# FASCICULE DE BREVET EUROPEEN

(11) **EP 1 961 528 B1**
(45) Date de publication et mention de la délivrance du brevet: **15.02.2012**
(21) Numéro de dépôt: 08358005.0
(22) Date de dépôt: 25.02.2008
(51) Int. Cl.: B27B 17/08, H02K 9/22

(54) **Scie à chaîne électrique à refroidissement statique et procédé mis en oeuvre pour obtenir ce refroidissement**
Elektrische Kettensäge mit statischer Abkühlung und Umsetzungsverfahren zum Erreichen dieser Abkühlung
Electrical chainsaw with static cooling and method implemented to obtain this cooling

(30) Priorité: 26.02.2007 FR 0701358
(43) Date de publication de la demande: 27.08.2008
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 0 024 268
- EP-A- 0 192 469
- US-A1- 2005 236 917

## Description

La présente invention concerne une scie à chaîne électrique selon le préambule de la revendication 1 ; elle vise aussi le procédé mis en oeuvre pour réaliser un refroidissement selon le préambule de la revendication 15.

Une telle scie à chaîne et un tel procédé sont connus de EP-0024268.

Plus précisément, l'invention s'applique aux scies à chaîne dans lesquelles l'entraînement de la chaîne de coupe est réalisé par un moteur électrique.

L'entraînement de la chaîne de coupe des scies à chaîne électriques connues est réalisé au moyen de moteurs électriques à faible rendement, de sorte que 50 % environ de la puissance délivrée par le moteur est à dissiper, pour éviter les effets d'une surchauffe, du fait des pertes thermiques importantes générées.

Les dispositifs utilisés pour effectuer la dissipation de la chaleur générée par le moteur électrique mettent en oeuvre des turbines ou des ventilateurs créant une circulation d'air pulsé autour du moteur. L'adjonction d'une turbine ou d'un ventilateur au moteur de la scie a notamment pour inconvénients de compliquer la fabrication de l'outil, d'augmenter son prix de revient, et d'entraîner une consommation supplémentaire d'énergie, s'ajoutant à celle qui est nécessaire à l'entraînement de la chaîne de coupé.

En outre, pour être efficace, ces systèmes de refroidissement nécessitent de ménager des ouvertures dans le carter du moteur pour faciliter la circulation de l'air de refroidissement autour de celui-ci. Ces ouvertures ont pour principal inconvénient de rompre l'étanchéité du moteur et de permettre la pénétration de l'eau, des poussières et de la sciure résultant de la coupe du bois.

Dans le document EP-0024 268 est décrit un outil électroportatif comportant un moteur électrique à courant continu sans balais et à faible voltage, plus particulièrement applicable à la réalisation de petits outils portables de faible puissance tels que perceuses, taille haie, coupe herbe ou analogue, l'application de cet outil aux scies à chaîne électriques étant également envisagée. Toutefois, ce document ne soulève pas le problème du refroidissement du moteur de l'outil et n'apporte donc aucune solution à ce problème que l'on doit de ce fait considérer comme étant traité par le procédé classique précédemment mentionné.

Dans le document US-2005/0236917. est décrit un outil à main électrique comprenant un moteur électrique renfermé dans une enveloppe en matière plastique elle-même logée dans le carter de l'outil, et un système de refroidissement constitué par un dispositif conducteur thermique reliant ladite enveloppe et ledit carter, de sorte à permettre une dissipation de la chaleur produite par le moteur. Ce moyen de refroidissement complique la fabrication de l'outil et ne permet pas une dissipation de chaleur efficace pour des moteurs électriques de fortes puissances tels que ceux qui équipent généralement les scies à chaîne électriques.

L'invention a notamment pour but de remédier aux inconvénients susmentionnés des scies à chaîne électriques et de leur système de refroidissement.

On rappelle que les scies à chaîne couramment appelées tronçonneuses sont bien connues et sont communément utilisées pour débiter des matériaux divers (bois, béton, briques, carreaux, etc.). Elles comprennent un dispositif de coupe constitué par une chaîne de coupe sans fin montée tournante autour d'un pignon d'entraînement et d'un guide-chaîne de forme généralement oblongue et muni d'un rail périphérique de guidage, et une source de puissance qui, dans le cas des scies électriques est constituée par un moteur électrique réalisant l'entraînement de cette chaîne, par l'intermédiaire dudit pignon.

Selon une première disposition caractéristique de l'invention, le moteur électrique d'entraînement de la chaîne de coupe est, renfermé dans un carter constitué d'au moins deux parties et exécuté en alliage métallique léger bon conducteur de la chaleur, avec une surface duquel il se trouve en contact, de sorte à assurer le refroidissement statique dudit moteur.

De préférence, la scie à chaîne comporte une carte électronique de pilotage du moteur d'entraînement de la chaîne de coupe et cette carte électronique est également logée dans ledit carter refroidisseur dont une surface se trouve directement en contact avec les composants de commutation de cette carte électronique de pilotage.

De préférence, le carter refroidisseur est exécuté en alliage d'aluminium ou en alliage de magnésium.

Selon un mode d'exécution préféré, au moins l'une des parties du carter comporte une ou plusieurs ailettes de refroidissement.

Selon un autre mode d'exécution, l'une des faces de l'une des parties constitutives du carter refroidisseur, est agencée pour recevoir et supporter le guide-chaîne démontable de l'outil et avec laquelle ce dernier se trouve en contact de sorte que ledit guide-chaîne coopère ainsi à la dissipation de la chaleur générée par le moteur.

Selon un autre mode d'exécution, la poignée de la scie à chaîne rattachée au carter refroidisseur de celle-ci constitue un dispositif échangeur participant au refroidissement du moteur d'entraînement de la chaîne de coupe de ladite scie.

De préférence, la poignée fait partie intégrante du carter.

Selon un autre mode d'exécution, la poignée refroidisseuse est fixée sur les deux parties constitutives du carter.

Selon un autre mode d'exécution, applicable aux scies à chaîne à perche, la perche constitue également un dispositif échangeur participant au refroidissement du moteur d'entraînement de la chaîne de coupe desdites scies.

Avantageusement, chacune des parties du carter refroidisseur, le guide-chaîne, la poignée et la perche coopèrent avec le moteur et avec la carte électronique de pilotage dudit moteur pour véhiculer la chaleur générée par ces derniers vers l'extérieur.

Selon un mode d'exécution intéressant, le stator du moteur est directement en contact avec l'une des parties du carter refroidisseur.

Avantageusement, les chignons du bobinage du stator du moteur sont enveloppés, sans contact, respectivement par l'une et l'autre parties du carter.

De manière intéressante, les logements respectifs du moteur et de la carte électronique de pilotage dans les carters sont séparés par des cloisons refroidisseuses aménagées dans les deux parties du carter refroidisseur.

Avantageusement, l'assemblage des deux parties du carter est étanche à l'eau et à la poussière.

La scie à chaîne électrique à refroidissement statique selon l'invention procure plusieurs avantages intéressants :
L'utilisation d'un moteur "brushless" à fort rendement, supérieur à 68 % générant de faibles pertes thermiques, c'est-à-dire, une faible énergie à dissiper, permet la mise en oeuvre d'un dispositif de refroidissement statique efficace par convection ou rayonnement. Ce dispositif permet aussi d'évacuer la chaleur dégagée par les composants de commutation de puissance de la carte électronique de pilotage.

Le bon rendement du moteur et le dispositif de refroidissement statique permettent de réaliser un corps d'outil peu encombrant et léger qui ne gêne pas l'utilisation de l'outil.

Le dispositif de refroidissement est économique et simple de conception, aucune adjonction de pièces supplémentaires au moteur proprement dit n'est nécessaire.

Il ne nécessite la prévision d'aucune ouverture dans le carter, de sorte que celui-ci est étanche à l'humidité, à la poussière et à la sciure.

Les scies à chaîne électriques motorisées et équipées du système de refroidissement selon l'invention constituent des outils professionnels capables de fonctionner pendant de longues durées.

Selon le procédé de l'invention, on enferme le moteur d'entraînement de la chaîne dans un carter constitué d'au moins deux parties et exécuté en alliage métallique léger, bon conducteur de la chaleur, une surface au moins de ce carter étant placée en contact avec ledit moteur, de sorte à assurer le refroidissement statique de ce dernier.

Selon un mode de mise en oeuvre préféré appliqué à une scie à chaîne comportant une carte électronique de pilotage du moteur, le procédé est encore remarquable en ce que les composants de commutation de celle-ci sont placés au contact d'une surface d'au moins une partie du carter refroidisseur.

Les buts, caractéristiques et avantages ci-dessus, et d'autres encore, ressortiront mieux de la description qui suit et des dessins annexés dans lesquels:
La figure 1 est une vue de face d'un exemple de réalisation d'une scie à chaîne auquel peut être appliquée l'invention.

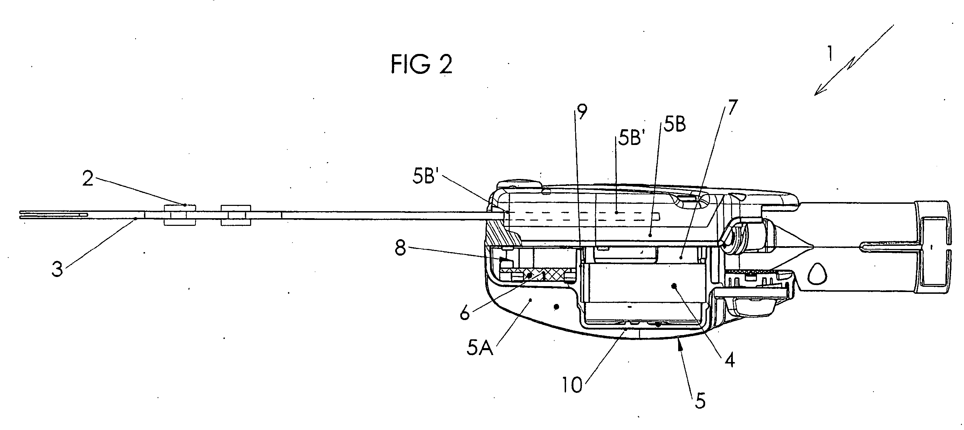

La figure 2 est une vue avec arrachement et en coupe partielle selon la ligne II-II de la figure 1.
La figure 3 est une vue analogue à la figure 2 et représente une scie à chaîne selon un deuxième mode de réalisation de l'invention.
La figure 4 est également une vue analogue à la figure 2 et montre une scie à chaîne selon un troisième mode de mise en oeuvre de l'invention.

On se réfère auxdits dessins pour décrire des exemples intéressants, quoique nullement limitatifs, de réalisation de la scie à chaîne et de son procédé de refroidissement selon l'invention.

Les organes de la scie à chaîne qui remplissent les mêmes fonctions dans les trois modes de mise en oeuvre illustrés et décrits, sont désignés par les mêmes références sur les dessins et dans l'exposé qui suit.

Les scies à chaîne 1 communément utilisées pour débiter des matériaux divers (bois, béton, briques, carreaux,...) comprennent un dispositif de coupe constitué par une chaîne sans fin 2 montée tournante autour d'un pignon d'entraînement et d'un guide-chaîne 3 de forme généralement oblongue et une source de puissance qui, dans le cas présent, est constituée par un moteur électrique 4.

Ce moteur électrique 4 est constitué par un moteur à courant continu sans balais ou moteur "brushless" de préférence d'une puissance supérieure à 500 W et à fort rendement, supérieur à 68 %, par exemple d'une puissance de l'ordre de 1 kW et d'un rendement de l'ordre de 85 à 90 % , dont le fonctionnement génère de faibles quantités d'énergie calorifique à dissiper.

Ce moteur électrique sans balais 4 est renfermé selon l'invention dans un carter 5 constitué d'au moins deux parties 5A, 5B et exécuté en alliage métallique léger, bon conducteur de la chaleur, de préférence en alliage d'aluminium ou en alliage de magnésium.

Selon l'invention, le moteur 4 est positionné dans le carter 5, de sorte à se trouver en contact direct avec au moins une surface d'au moins l'une (5A) des parties 5A, 5B du carter 5, en assurant ainsi le refroidissement statique dudit moteur, par convection et/ou rayonnement.

Dans certains modes de réalisation préférés, la scie à chaîne peut comporter une carte électronique 6 de pilotage du moteur 4.

Selon un mode d'exécution, la carte électronique de pilotage du moteur 4 d'entraînement de la chaîne de coupe 2 de la scie est également renfermée dans le carter refroidisseur 5, de sorte que ses composants de commutation de puissance 6a se trouvent en contact avec au moins une surface d'au moins l'une des parties 5A, 5B du carter, en assurant ainsi le refroidissement statique desdits composants de commutation, par convection et/ou rayonnement.

Le moteur 4 est installé dans un premier logement 7 ménagé dans le carter 5, tandis que la carte électronique 6 est positionnée dans un deuxième logement 8 ménagé à proximité du premier et séparé de celui-ci par une cloison 9 formant paroi refroidisseuse.

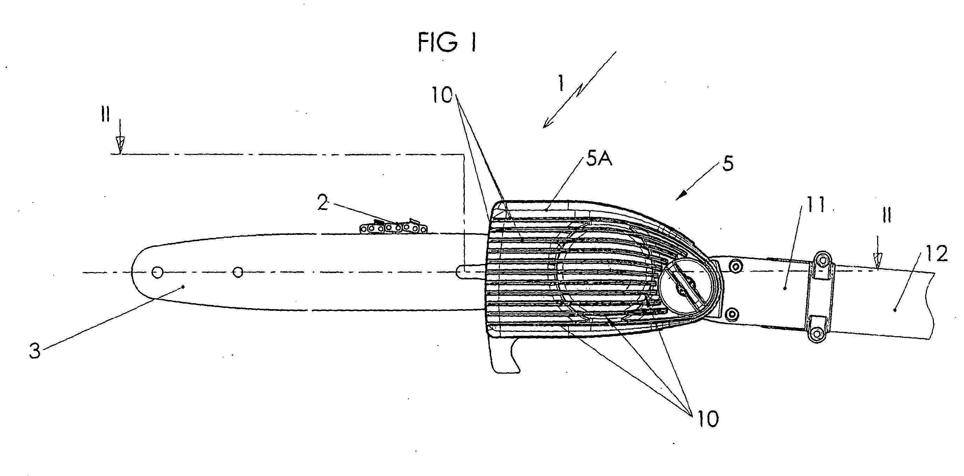

L'une au moins des parties 5A, 5B du carter 5, de préférence la partie 5A comme illustré sur les dessins, est munie d'une ou plusieurs ailettes de refroidissement 10 s'étendant vers l'extérieur, de manière sensiblement parallèle et sur toute la longueur du carter 5, comme le montre notamment la figure 1.

Le stator 4a du moteur 4 est placé directement en contact avec l'une (5A) des parties 5A, 5B du carter.

Par exemple, le moteur 4 est logé dans un cylindre borgne 13 que présente la face interne de la partie 5A du carter 5 et le fond 13' de ce cylindre borgne se trouve en contact avec les ailettes de refroidissement 10. De préférence, le stator 4a du moteur 4 est directement en contact avec la paroi latérale de ce cylindre 13.

D'autre part, les chignons 4B de bobinage du stator 4a du moteur 4 ont enveloppés respectivement par l'une et l'autre des parties 5A, 5B du carter refroidisseur 5.

Les deux parties 5A, 5B du carter 5 sont assemblées de manière étanche au moyen de tout système de liaison approprié (vis, boulons, etc).

Selon une autre disposition caractéristique, l'une des faces (5B') de l'une des parties 5A, 5B constitutives du carter refroidisseur 5, est agencée pour recevoir et supporter le guide-chaîne métallique démontable de la scie à chaîne. Dans ce cas, le guide-chaîne se trouve en contact avec une surface 5B' du carter, de sorte que ledit guide-chaîne constitue un moyen d'échange thermique supplémentaire et coopère aussi à la dissipation de la chaleur générée par le moteur 4 d'entraînement de la chaîne de coupe 2. Il est exécuté dans un alliage métallique léger bon conducteur de la chaleur.

Selon un autre mode d'exécution, la poignée de la scie à chaîne rattachée au carter refroidisseur 5 de celle-ci constitue également un dispositif échangeur supplémentaire participant à la dissipation de la chaleur générée par le moteur 4 d'entraînement de la chaîne de coupe de la scie.

Cette poignée peut faire partie intégrante du carter 5. Elle peut être rapportée sur ledit carter refroidisseur et fixée sur l'une ou sur les deux parties 5A,5B de ce dernier par tous moyens appropriés. Dans ce cas, la poignée est exécutée en alliage métallique léger, bon conducteur de la chaleur.

Selon un autre mode d'exécution applicable aux scies à chaîne à perche, selon lesquelles la tête de coupe est disposée à distance de la poignée de commande au moyen d'un bras ou perche 12, cette perche constitue également un dispositif échangeur participant au refroidissement du moteur 4 d'entraînement de la chaîne de coupe. Dans ce cas, la perche 12 et le manchon de raccordement 11 de celle-ci sont exécutés en alliage métallique léger, bon conducteur de la chaleur.

Chacune des parties 5A, 5B du carter refroidisseur 5, le guide-chaîne démontable 3, la poignée et, dans le cas des tronçonneuses à perche, la perche 12, collabore avec le moteur 4 et avec la carte électronique de pilotage 6 dudit moteur, pour véhiculer la chaleur générée par ces derniers vers l'extérieur.

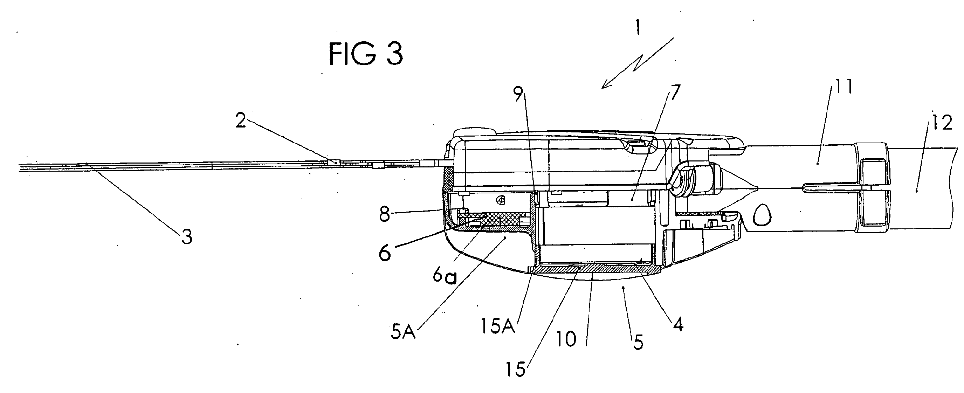

Selon le mode d'exécution illustré à la figure 3, le cylindre 13 est ouvert et la partie 5A du carter 5 comporte une ouverture 14 qui donne accès au logement 7 et qui permet la mise en place et le retrait aisés du moteur 4 dans ledit logement. Un chapeau obturateur métallique 15 ferme cette ouverture 14 et constitue ainsi le fond dudit cylindre 13. Ce chapeau obturateur 15 comporte une jupe annulaire 15a qui est engagée à force dans le logement 7 et qui serre une partie du moteur 4 contre le cylindre 13. Le chapeau obturateur 15 est, de préférence, réalisé dans le même matériau thermiquement conducteur que celui dans lequel sont exécutées les autres parties du carter 5.

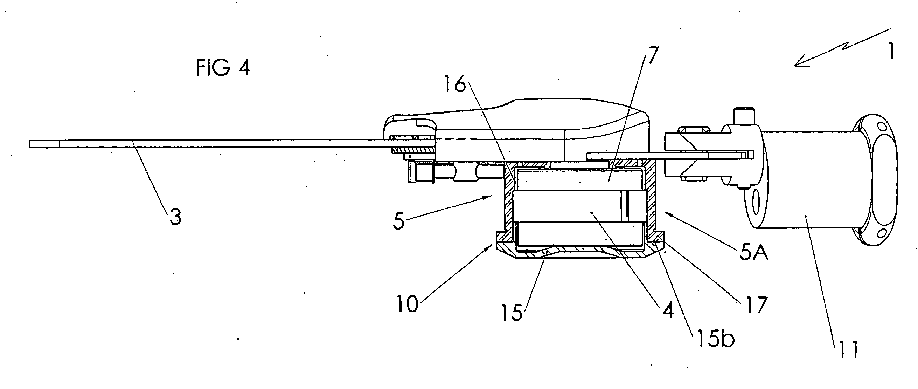

Selon le mode d'exécution illustré à la figure 4, le carter refroidisseur 5 ne délimite qu'un seul logement 16. L'obturateur 15 est vissé sur une bride 17 du carter 5. Cette bride 17 et la portion périphérique 15b du chapeau obturateur 15b forment, ensemble, l'unique ailette 10 équipant la partie 5A du carter 5.

## Revendications

1. Scie à chaîne électrique du genre comportant une chaîne de coupe (2) montée tournante autour d'un pignon d'entraînement et d'un guide-chaîne (3) de forme oblongue, et un moteur électrique (4) à courrant continu sans balais réalisant l'entraînement de cette chaîne par l'intermédiaire dudit pignon, **caractérisée en ce que** ce moteur électrique est renfermé dans un carter (5) exécuté en alliage métallique léger bon conducteur de la chaleur et constitué d'au moins deux parties (5A, 5B), ledit moteur électrique (4) se trouvant en contact avec une surface dudit carter (5), de sorte à assurer le refroidissement statique dudit moteur.

2. Scie à chaîne électrique selon la revendication 1, comportant une carte électronique (6) de pilotage du moteur d'entraînement (4) de la chaîne de coupe, **caractérisée en ce que** cette carte électronique (6) est également logée dans ledit carter refroidisseur (5A,5B) dont une surface se trouve directement en contact avec les composants de commutation (6a) de cette carte électronique de pilotage.

3. Scie à chaîne électrique suivant l'une quelconque des revendications 1 ou 2, **caractérisée en ce que** le carter refroidisseur (5A,5B) est exécuté en alliage d'aluminium, ou en alliage de magnésium.

4. Scie à chaîne électrique selon l'une quelconque des revendications 1 à 3, **caractérisée en ce qu'**au moins l'une (5A) des parties (5A, 5B) du carter (5) comporte une ou plusieurs ailettes de refroidissement (10).

5. Scie à chaîne électrique suivant l'une quelconque des revendications 1 à 4, **caractérisée en ce que** l'une (5B') des faces de l'une (5B) des parties (5A, 5B) constitutives du carter refroidisseur (5) est agencée pour recevoir et supporter le guide-chaîne métallique démontable (3) de ladite scie à chaîne avec laquelle elle se trouve en contact, de sorte que ledit guide-chaîne (3) coopère aussi à la dissipation de la chaleur générée par le moteur (4).

6. Scie à chaîne électrique, selon l'une quelconque des revendications 1 à 5 **caractérisée en ce que** la poignée métallique rattachée au carter refroidisseur (5) de celle-ci, constitue un dispositif échangeur supplémentaire participant au refroidissement du moteur d'entraînement (4) de la chaîne de coupe (2) de ladite scie.

7. Scie à chaîne électrique suivant la revendication 6, **caractérisée en ce que** la poignée fait partie intégrante du carter refroidisseur (5).

8. Scie à chaîne électrique selon la revendication 6, **caractérisée en ce que** la poignée refroidisseuse est fixée sur les deux parties constitutives (5A,5B) du carter (5).

9. Scie à chaîne électrique selon l'une quelconque des revendications 1 à 8, applicable aux tronçonneuses à perche, **caractérisé en ce que** la perche (12) constitue également un dispositif échangeur participant au refroidissement du moteur (4) d'entraînement de la chaîne de coupe (2) de ladite scie.

10. Scie à chaîne électrique selon la revendication 9, **caractérisée en ce que** chacune des parties (5A, 58) du carter refroidisseur (5), le guide-chaîne démontable (3), la poignée et la perche (12), collaborent avec le moteur (4) et avec la carte électronique de pilotage (6) dudit moteur pour véhiculer la chaleur générée par ces derniers vers l'extérieur.

11. Scie à chaîne électrique suivant l'une quelconque des revendications 1 à 10, **caractérisée en ce que** le stator (4a) du moteur (4) est directement en contact avec l'une (5A) des parties du carter refroidisseur, de préférence avec la paroi latérale d'un cylindre (13) que comporte ledit carter et dans lequel est logé ledit moteur.

12. Scie à chaîne électrique selon l'une quelconque des revendications 1 à 11, **caractérisée en ce que** les chignons (4b) du bobinage du stator (4a) du moteur (4) sont enveloppés respectivement par l'une (5A) et l'autre (5B) parties du carter refroidisseur.

13. Scie à chaîne électrique selon l'une quelconque des revendications 2 à 12, **caractérisée en ce que** les logements respectifs (7,8) du moteur (4) et de la carte électronique de pilotage (6) ménagés dans les parties (5A, 5B) du carter (5) sont séparés par une cloison refroidisseuse (9) aménagée dans les deux parties du carter refroidisseur.

14. Scie à chaîne électrique suivant l'une quelconque des revendications 2 à 13, **caractérisée en ce que** les deux parties (5A, 5B) du carter (5) sont assemblées de manière étanche.

15. Procédé de refroidissement de scies à chaîne électriques du genre comportant une chaîne de coupe (2) montée tournante autour d'un pignon d'entraînement et d'un guide-chaîne (3) de forme oblongue et un moteur électrique (4) à courrant continu sans balais réalisant l'entraînement de cette chaîne par l'intermédiaire dudit pignon, **caractérisé en ce que** l'on enferme ce moteur dans un carter (5) exécuté en alliage métallique léger bon conducteur de la chaleur et constitué d'au moins deux parties (5A, 5B) ; ledit moteur électrique (4) étant placé en contact avec au moins une surface dudit carter (5), de sorte à assurer le refroidissement statique dudit moteur.

16. Procédé de refroidissement statique selon la revendication 15 appliqué à une scie à chaîne comportant une carte électronique (6) de pilotage du moteur (4) d'entraînement de la chaîne de coupe (2) de ladite scie, **caractérisé en ce que** les composants de commutation (6a) de cette carte électronique de pilotage (6) sont placés au contact d'une surface d'au moins une partie (5A,5b) du carter refroidisseur (5).

## Claims

1. An electric chain saw of the kind comprising a cutting chain (2) mounted rotatably about a drive pinion and a chain guide (3) of oblong shape, and a brushless dc electric motor (4) for driving said chain by way of said pinion, **characterised in that** said electric motor is contained in a housing (5) made of light metal alloy which is a good heat conductor and formed by at least two parts (5A, 5B), said electric motor (4) being in contact with a surface of said housing (5) so as to provide for static cooling of said motor.

2. An electric chain saw according to claim 1 comprising an electronic card (6) for pilot control of the motor (4) for driving the cutting chain **characterised in that** said electronic card (6) is also accommodated in said cooling housing (5A, 5B) of which a surface is directly in contact with the switching components (6a) of said electronic pilot control card.

3. An electric chain saw according to either one of claims 1 and 2 **characterised in that** the cooling housing (5A, 5B) is made of aluminium alloy or magnesium alloy.

4. An electric chain saw according to any one of claims 1 to 3 **characterised in that** at least one (5A) of the parts (5A, 5B) of the housing (5) comprises one or more cooling fins (10).

5. An electric chain saw according to any one of claims 1 to 4 **characterised in that** one (5B') of the faces of one (5B) of the parts (5A, 5B) forming the cooling housing (5) is arranged to receive and support the removable metal chain guide (3) of said chain saw with which it is in contact so that said chain guide (3) also co-operates in dissipating the heat generated by the motor (4).

6. An electric chain saw according to any one of claims 1 to 5 **characterised in that** the metal handle attached to the cooling housing (5) thereof constitutes an additional exchanger device taking part in cooling of the motor (4) for driving the cutting chain (2) of said saw.

7. An electric chain saw according to claim 6 **characterised in that** the handle forms an integral part of the cooling housing (5).

8. An electric chain saw according to claim 6 **characterised in that** the cooling handle is fixed on the two parts (5A, 5B) forming the housing (5).

9. An electric chain saw according to any one of claims 1 to 8 which can be applied to pole-type chain saws **characterised in that** the pole (12) also constitutes an exchanger device taking part in cooling of the motor (4) for driving the cutting chain (2) of said saw.

10. An electric chain saw according to claim 9 **characterised in that** each of the parts (5A, 5B) of the cooling housing (5), the removable chain guide (3), the handle and the pole (12) co-operate with the motor (4) and with the electronic card (6) for pilot control of said motor to carry the heat generated by the latter components to the exterior.

11. An electric chain saw according to any one of claims 1 to 10 **characterised in that** the stator (4a) of the motor (4) is directly in contact with one (5A) of the parts of the cooling housing, preferably with the side wall of a cylinder (13) that said housing comprises and in which said motor is accommodated.

12. An electric chain saw according to any one of claims 1 to 11 **characterised in that** the turns (4b) of the winding of the stator (4a) of the motor (4) are respectively enclosed by one (5A) and the other (5B) parts of the cooling housing.

13. An electric chain saw according to any one of claims 2 to 12 **characterised in that** the respective housings (7, 8) for the motor (4) and the electronic pilot control card (6) which are provided in the parts (5A, 5B) of the housing (5) are separated by a cooling partition (9) provided in the two parts of the cooling housing.

14. An electric chain saw according to any one of claims 2 to 13 **characterised in that** the two parts (5A, 5B) of the housing (5) are sealingly assembled.

15. A process for cooling electric chain saws of the kind comprising a cutting chain (2) mounted rotatably about a drive pinion and a chain guide (3) of oblong shape and a brushless dc electric motor (4) for driving said chain by way of said pinion, **characterised in that** said motor is enclosed in a housing (5) made of light metal alloy which is a good heat conductor and formed by at least two parts (5A, 5B); said electric motor (4) being placed in contact with at least one surface of said housing (5) so as to provide for static cooling of said motor.

16. A static cooling process according to claim 15 applied to a chain saw comprising an electronic card (6) for pilot control of the motor (4) for driving the cutting chain (2) of said saw, **characterised in that** the switching components (6a) of said electronic pilot control card (6) are placed in contact with a surface of at least one part (5A, 5B) of the cooling housing (5).

## Patentansprüche

1. Elektrische Kettensäge der Art, die eine Schneidkette (2), die um ein Antriebsritzel und eine Kettenführung (3) mit länglicher Form umlaufend montiert ist, und einen bürstenlosen Gleichstrom-Elektromotor (4) umfasst, der den Antrieb dieser Kette über das Ritzel verwirklicht, **dadurch gekennzeichnet, dass** dieser Elektromotor in einem Gehäuse (5) aufgenommen ist, das aus einer Leichtmetalllegierung mit guter Wärmeleitung ausgeführt ist und aus mindestens zwei Teilen (5A, 5B) gebildet ist, wobei sich der Elektromotor (4) in Kontakt mit dem Gehäuse (5) befindet, so dass die statische Abkühlung des Motors gewährleistet wird.

2. Elektrische Kettensäge nach Anspruch 1, enthaltend eine Elektronikkarte (6) zum Steuern des Antriebsmotors (4) der Schneidkette, **dadurch gekennzeichnet, dass** diese Elektronikkarte (6) ebenfalls in diesem Kühlgehäuse (5A, 5B) untergebracht ist, von dem sich eine Seite in direktem Kontakt mit den Schaltkomponenten (6a) dieser Elektronikkarte zum Steuern befindet.

3. Elektrische Kettensäge nach einem der Ansprüche 1 oder 2, **dadurch gekennzeichnet, dass** das Kühlgehäuse (5A, 5B) aus einer Aluminiumlegierung oder einer Magnesiumlegierung ausgeführt ist.

4. Elektrische Kettensäge nach einem der Ansprüche 1 bis 3, **dadurch gekennzeichnet, dass** mindestens einer (5A) der Teile (5A, 5B) des Gehäuses (5) eine oder mehrere Kühlrippen (10) umfasst.

5. Elektrische Kettensäge nach einem der Ansprüche 1 bis 4, **dadurch gekennzeichnet, dass** eine (5B') der Seiten von einem (5B) der Teile (5A, 5B), die das Kühlgehäuse (5) bilden, dafür ausgelegt ist, die abnehmbare Metall-Kettenführung (3) der Kettensäge aufzunehmen und zu halten, mit der sie sich in Kontakt befindet, so dass die Kettenführung (3) ebenfalls an der Ableitung der durch den Motor (4) erzeugten Wärme mitwirkt.

6. Elektrische Kettensäge nach einem der Ansprüche 1 bis 5, **dadurch gekennzeichnet, dass** der an ihrem Kühlgehäuse (5) angebrachte Metallgriff eine zusätzliche Tauschereinrichtung bildet, die an der Kühlung des Antriebsmotors (4) der Schneidkette (2) der Säge beteiligt ist.

7. Elektrische Kettensäge nach Anspruch 6, **dadurch gekennzeichnet, dass** der Griff ein integraler Bestandteil des Kühlgehäuses (5) ist.

8. Elektrische Kettensäge nach Anspruch 6, **dadurch gekennzeichnet, dass** der Kühlgriff an den beiden Bestandteilen (5A, 5B) des Gehäuses (5) befestigt ist.

9. Elektrische Kettensäge nach einem der Ansprüche 1 bis 8, die für Stangenmotorsägen verwendet werden kann, **dadurch gekennzeichnet, dass** die Stange (12) ebenfalls eine Tauschereinrichtung bildet, die an der Kühlung des Antriebsmotors (4) der Schneidkette (2) der Säge beteiligt ist.

10. Elektrische Kettensäge nach Anspruch 9, **dadurch gekennzeichnet, dass** jeder der Teile (5A, 5B) des Kühlgehäuses (5), die abnehmbare Kettenführung (3), der Griff und die Stange (12) mit dem Motor (4) und mit der Elektronikkarte (6) zum Steuern des Motors zusammenarbeiten, um die von Letzteren erzeugte Wärme nach außen abzuführen.

11. Elektrische Kettensäge nach einem der Ansprüche 1 bis 10, **dadurch gekennzeichnet, dass** der Stator (4a) des Motors (4) direkt mit einem (5A) der Teile des Kühlgehäuses in Kontakt steht, vorzugsweise mit der Seitenwand eines Zylinders (13), den das Gehäuse umfasst und In dem der Motor untergebracht ist.

12. Elektrische Kettensäge nach einem der Ansprüche 1 bis 11, **dadurch gekennzeichnet, dass** die Wicklungsknoten (4b) des Stators (4a) des Motors (4) jeweils von dem einen (5A) und dem anderen (5B) Teil des Kühlgehäuses umhüllt sind.

13. Elektrische Kettensäge nach einem der Ansprüche 2 bis 12, **dadurch gekennzeichnet, dass** die jeweiligen Aufnahmen (7, 8) für den Motor (4) und die Elektronikkarte (6) zum Steuern, die in den Teilen (5A, 5B) des Gehäuses ausgespart sind, durch ein Kühlungs-Lagerschild (9) getrennt sind, das in den beiden Teilen des Kühlgehäuses angeordnet ist.

14. Elektrische Kettensäge nach einem der Ansprüche 2 bis 13, **dadurch gekennzeichnet, dass** die beiden Teile (5A, 5B) des Gehäuses (5) dicht verschlossen zusammengefügt sind.

15. Verfahren zum Kühlen von elektrischen Kettensägen der Art, die eine Schneidkette (2), die um ein Antriebsritzel und eine Kettenführung (3) mit länglicher Form umlaufend montiert ist, und einen bürstenlosen Gleichstrom-Elektromotor (4) umfasst, der den Antrieb dieser Kette über das Ritzel verwirklicht, **dadurch gekennzeichnet, dass** dieser Elektromotor in ein Gehäuse (5) eingeschlossen wird, das aus einer Leichtmetalllegierung mit guter Wärmeleitung ausgeführt ist und aus mindestens zwei Teilen (5A, 5B) gebildet wird, wobei der Elektromotor (4) in Kontakt mit mindestens einer Fläche des Gehäuses (5) positioniert wird, so dass die statische Abkühlung des Motors gewährleistet wird.

16. Verfahren zum statischen Kühlen nach Anspruch 15, das auf eine Kettensäge angewendet wird, die eine Elektronikkarte (6) zum Steuern des Antriebsmotors (4) der Schneidkette (2) der Säge umfasst, **dadurch gekennzeichnet, dass** die Schaltkomponenten (6a) dieser Elektronikkarte (6) zum Steuern In Kontakt mit einer der Flächen von mindestens einem Teil (5A, 5B) des Kühlgehäuses (5) positioniert werden.
